(19) Europäisches Patentamt / European Patent Office / Office européen des brevets

(11) **EP 2 525 485 B1**

(12) **EUROPEAN PATENT SPECIFICATION**

(45) Date of publication and mention
of the grant of the patent:
**13.07.2016 Bulletin 2016/28**

(51) Int Cl.:
*H02M 7/538* (2007.01)    *H02M 7/523* (2006.01)
*H05B 6/06* (2006.01)

(21) Application number: **11166731.7**

(22) Date of filing: **19.05.2011**

(54) **Method to increase the regulation range of AC-AC Quasi Resonant (QR) converters**

Verfahren zur Erhöhung des Regelungsbereichs von quasiresonanten Wechselstromumrichtern

Methode pour etendre la plage de réglage d' onduleurs quasi-resonants

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.11.2012 Bulletin 2012/47**

(73) Proprietor: **WHIRLPOOL CORPORATION**
**Benton Harbor**
**Michigan 49022 (US)**

(72) Inventors:
• **Pastore, Cristiano**
**21025, Comerio (IT)**
• **Gutierrez, Diego**
**21025, Comerio (IT)**

(74) Representative: **Guerci, Alessandro**
**Whirlpool Europe S.r.l.**
**Patent Department**
**Viale G. Borghi 27**
**21025 Comerio (VA) (IT)**

(56) References cited:
**EP-A1- 1 734 789**        **US-A1- 2003 205 572**
**US-A1- 2007 040 533**

• **TANAKA H ET AL: "Electromagnetic induction eddy current-based far infrared rays radiant heater using high frequency ZVS-PWM inverter", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, vol. 1, 17 June 2001 (2001-06-17), pages 108-113, XP010559132, DOI: 10.1109/PESC.2001.954003 ISBN: 978-0-7803-7067-8**
• **IZAKI K ET AL: "NEW CONSTANT-FREQUENCY VARIABLE POWERED QUASIRESONANT INVERTER TOPOLOGY USING SOFT-SWITCHED TYPE IGBTS FOR INDUCTION-HEATED COOKING APPLIANCE WITH ACTIVE POWER FILTER", EPE '95: 6TH. EUROPEAN CONFERENCE ON POWER ELECTRONICS AND APPLICATIONS. SEVILLA, SEPT. 19 - 21, 1995; [EUROPEAN CONFERENCE ON POWER ELECTRONICS AND APPLICATIONS], BRUSSELS, EPE ASSOCIATION, B, vol. 2, 19 September 1995 (1995-09-19), pages 2.129-2.134, XP000537734,**

## Description

Object of the present invention is a method for improving the performances of a Quasi Resonant converter. More specifically, object of the present invention is a method for improving the power regulation range of the same converter and in connection with this improvement, limiting the harmonic emissions.

Quasi Resonant (QR) converters are widely used as AC power supplies, for instance to supply induction coils in induction hobs or to supply magnetrons in microwave ovens. Such class of converters, also named as "Single-Ended" converters, is particularly attractive for the field of domestic appliances because it requires just one solid state switch, normally an IGBT, and only one resonant capacitor. QR converters are the best compromise between cost and energy conversion efficiency.

US2003/205572A1 **discloses to vary the power of a resonant ZVS converter by changing the frequency and the duty cycle.** EP1734789A1 **discloses to vary the frequency according to the DC-bus voltage of the rectified mains.**

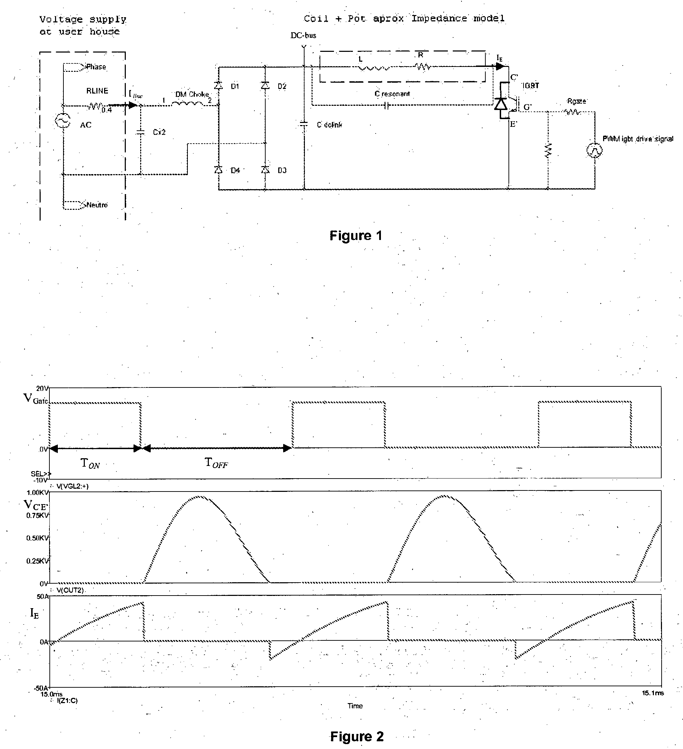

In figure 1 it is shown the basic architecture of a known QR converter.

QR converter behaves as a LR $1^{st}$ order system during the charging phase and as an LRC $2^{nd}$ order system in the resonant phase. More in detail, QR converters operate according to a two phases sequence wherein during the first phase (the non-resonant one) an inductive element (L) is charged for a certain time interval (the activation period) up to a given current level. During the second phase (the resonant one, defined also as deactivation period) the energy stored in the inductor is transferred to a tuned resonant capacitor (C) and partially dissipated into a resistor (R): the energy dissipated into the resistor is the actual energy delivered to the load.

In some cases the L element is integral part of the load (like in induction coils), while in some others is located into a physical different unit (typically in the leakage transformer, like in magnetron supplies). The resistive portion of the load R rules the damping factor of the resonator. By controlling the charging time of the capacitor during the first phase through the solid state switch activation time, it is possible to adjust the power delivered by the converter to the load. QR converters are normally designed for a damping factor (which is R/2*SQRT(C/L) in the range between 1/2 and 1/5. Under these conditions and above a minimum predetermined power level (described in the following), converters are typically operated in "soft-switching" mode which consists in switching the device either when the voltage across it or when the current flowing into it is null (Zero Voltage Switching, ZVS), especially when turning on. As known in the art, this operating mode is particularly efficient because reduces stresses and the related thermal losses of the solid state switch during commutations. However, if the damping factor gets higher than a given threshold, the converter fails in achieving ZVS at turn on.

Drawbacks of this QR of converters lie in the very narrow range of output power being adjustable under the Soft-Switching regime. In particular, when the regulated output power falls below a certain predetermined minimum power limit, which derives from the design parameters of the converter, the converter fails in operating in soft switching mode causing a dramatic increase of thermal losses and causing also the increase of electromagnetic interferences.

On the other hand, when the set power level exceeds an upper maximum (Critical) power limit, which is also linked with the design parameters, the resonating voltage across the solid state switch terminals, in particular between the emitter and the collector of an IGBT, exceeds the maximum allowable rating (breakdown voltage) resulting in an instantaneous and irreversible damage of the switch.

The amplitude of the power deliverable by a QR converter can be adjusted between these two limits (the regulation range). The amplitude of this range is a characteristic for each converter of the QR topology and is commonly defined through the ratio between the maximum settable power, which is limited by the maximum admitted voltage across the switch terminals/junctions, and the minimum settable power, which is limited by the lost of the Zero Voltage Switching condition (named also as ZVS or Soft-Switching mode). A particular difficulty arise for instance when trying to regulate the average power delivered by the converter to a value below the minimum settable power.

In the art are also known solutions to supply an average power to induction cookers which is lower than the minimum settable power limit under which the converter can be operated in soft switching conditions.

The simplest mode is to operate the converter (not the IGBT gate) in the so called burst or ON-OFF mode, consisting in operating the converter for some amount of time $T_{active}$ (during which several charging and discharging phases occur) at the minimum power level adjustable according to ZVS conditions, and switching it off for another amount of time $T_{idle}$. By cyclically alternating over time the two phases, the average power delivered to the load can be calculated by multiplying the duty ratio $T_{active}/(T_{active} + T_{idle})$ with the minimum power limit (the minimum settable power settable in ZVS mode).

This method, has the disadvantage that the power is actually delivered to the load (and then ultimately to the food) in a pulsed and concentrated manner, instead of in a smooth mode. Moreover, considering that the time period of the pulsed power is also bounded by some regulatory standards (for instance the IEC61000-3-3 flicker's norm), the power pulsing period can hardly be made faster than the thermal time constant of the food, resulting in perceivable power un-evenness and possibly in food spoilage.

The method of the present invention overcomes the aforementioned drawbacks resulting in a substantial increase of the regulation range of QR converters while maintaining the use of soft switching operating mode and without introducing further limitations in the efficiency/reliability of the converter. Furthermore, this method does not require any additional hardware circuitry or component because it relies on an inventive modulation technique.

Other features and advantages of the present invention will become readily apparent to the skilled artisan from the following detailed description when read in light of the accompanying drawings, in which:

- Figure 1 shows the basic topology of a Quasi Resonant converter known in the art;
- Figure 2 shows the signal diagrams of Quasi Resonant converter operating in Soft-Switching mode;
- Figure 3 is a graph showing the voltage at the "dc-bus" terminal of Fig. 1;
- Figure 4 shows the profile of the current Iline drawn by the load from the power supply network when a known method which keeps TON substantially constant over the mains semi-period is applied and in which the resistive part of load R, is almost linear;
- Figure 5a show the target profile of the current drawn from the network by the load supplied by a quasi resonant converter, when the method according to the present invention is applied;
- Figure 5b shows the TON profile which results in the target current profile shown in Fig. 5a;
- Figure 6 shows the (mains) profile of the current Iline drawn by the converter form the power supply network in a preferred embodiment of the present invention compared to the current profile Iline obtained using known methods;
- Figure 7 shows an example of the harmonic spectrum of the current Iline drawn by the converter from the power supply network by applying the method of the present invention compared with the harmonic spectrum of the same current when a method known in the art is applied;
- Figure 8 shows a Power-set closed-loop control system for an Constant-Power mode operation according to the present invention; and
- Figure 9 shows a Power control system including a Current closed-loop control system for Power-constant mode operation according to the present invention.
- Figure 10 shows a preferred application of the method of the present invention.

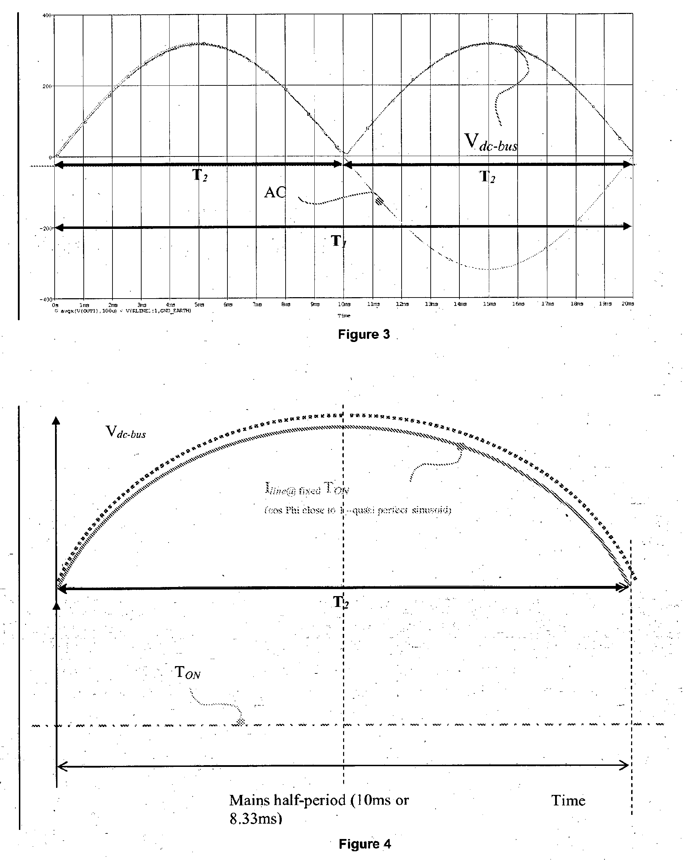

With reference to the above described figures, a Quasi Resonant converter (QR) for supplying an induction coil is fed with an AC power supply network (220-230V at 50 Hz or 60 Hz). The Power supply is fully rectified in order to supply the converter with a sequence of positive half waves because, in the described embodiment, the rectified voltage is not smoothed. In fact, according to the invention if a capacitor $C_{dclink}$ at the DC-bus terminal is present, it has a value not sufficiently high to keep substantially constant (smoothed) the dc-bus voltage $V_{dc\text{-}bus}$. As a consequence, the voltage signal at the output of the rectifier pulses at double frequency of the AC power supply network frequency and the (semi-) period $T_2$ of the rectified voltage $V_{dc}\text{-}_{bus}$ is half of the AC power supply period $T_1$, as shown in Fig. 3. The converter comprises a resonant capacitor C (indicated as $C_{resonant}$ in Fig. 1), a solid state switch IGBT working in the commutation regime, a load L (the induction coil in an Induction Cooker), R (mainly, for instance, the resistance of a cooking utensil coupled with the coil). A resonant tank is made by the parallel connection of the inductor L and the resonant capacitor C.

The frequency of the rectified power supply source AC at the DC-bus terminal $V_{dc\text{-}bus}$ is much lower than the commutation frequency of the converter so that the voltage level $V_{dc\text{-}bus}$ of the rectified supply AC source can be considered constant during the activation time $T_{ON}$ of the converter, hence the name of DC-bus.

When the solid state switch IGBT is activated by a signal applied at its gate G', it allows the flowing of electric current between collector C' and emitter E', thus charging the energy storing element L.

When the activation signal is removed at the end of the activation time $T_{oN}$ the switch interrupts the energy transfer from the dc-bus capacitor into the inductor L, and the resonant phase begins: the LRC circuit starts to resonate in a damped manner. The current flows between the capacitor and the inductor, and the voltage between collector C' and emitter E' $V_{C'E'}$ of the switch terminals starts to freely oscillate at its damped resonance frequency. During the resonant phase the energy stored into L is partly bounced into C, and partly dissipated into R, representing the resistive portion of the load.

As shown in Figure 2, if the activation time ($T_{ON}$) has been kept sufficiently long, during the resonant phase the voltage between collector C' and emitter E' $V_{C'E'}$ of the IGBT tends to reverse the polarity by crossing the zero voltage level. In this case, the voltage between collector and emitter $V_{C'E'}$ tends to become lower than zero so that the current starts flowing through an IGBT anti parallel diode, which is normally integrated into the IGBT device. From this point in time onwards, the activation signal $T_{ON}$ can be newly applied, implementing a "Soft-Switching" commutation.

During each semi period $T_2$ repeating the cyclic alternation of those two steps is repeated. By varying the activation time $T_{ON}$ it is regulated the power supplied by the converter to the load within the range for which the soft switching is possible. The activation signal can be then periodically applied.

Once the characteristics of the load (L, R) are defined and the amplitude of the AC power supply voltage (the mains) are set, a given voltage rating can be chosen for the solid state switch and for the resonant capacitor (for instance 1200V). In fact, from QR design theory it is known that the limiting factor for the maximum allowable power regulation is given by the resonant voltage *Vres* (between the terminals of the resonant tank LC and approximately between collector C' and emitter E' $V_{C'E'}$ of the IGBT). Neglecting the resistive losses, it is possible to approximate:

$$Vres \cong \sqrt{\frac{2 \cdot E}{C}}$$

The maximum resonance voltage will by approximately achieved at instant of the maximum amplitude of the mains voltage (and of the rectified power supply voltage $V_{dc\text{-}bus}$);

Being $E$ the energy stored into the inductive component of the load during the switching on time phase $T_{ON}$, $E$ is approximately

$$E \cong \frac{1}{2} L \cdot I_{pk}^2 \,.$$

The amplitude peak of electric current $I_{pk}$ flowing during the activation time $T_{ON}$ is proportional to $T_{ON}$ and to the voltage amplitude of dc-bus voltage $V_{dc\text{-}bus}$. In particular:

$$I_{pk} = T_{ON} \cdot (V_{dc-bus} / L) \,.$$

The resonant voltage $V_{res}$ expressed in terms of $T_{ON}$ and dc-bus voltage $V_{dc\text{-}bus}$ can be therefore expressed as:

$$Vres \cong \frac{T_{ON} \cdot V_{dc-bus}}{\sqrt{LC}}$$

As known in the art, once the set power level $P_{set}$ for the converter has been defined, the converter is operated with a corresponding constant activation time $T_{ON}$.

In particular, when the phase of the alternate AC power supply network is equal to 90° or 270°, that is when the maximum (peak) value of $V_{dc\text{-}bus}$ is reached, the converter is operated with a $T_{ON}$ equal or lower than a safe value $T_{ON\ Critical}$, for which the resonating tank LC is charged to the a safe voltage value $V_{res\ Critical}$, which is safely far away from a switch damage voltage (IGBT breakdown voltage).

This voltage value is considered safely far away from switch damage voltage when it is typically in the range from 80% to 95% of the maximum voltage rated for the switch IGBT, in particular around 90%. For instance, it could be about 1100V for a 1200V rated device.

In a similar manner also the peak of the current $I_{line}$ drawn by the converter from the network (especially at 90° and 270° of the AC power supply network) is also upper limited for the same reasons.

In power control methods known in the art the activation time $T_{ON}$ is kept substantially constant during the whole network power supply semi period $T_2$, as shown in Fig. 4. However, in some analog implementations $T_{ON}$ can deviate from being strictly constant. This fact is caused by some transitional/spurious signals given by the noise present in the bandwidth of the feedback loop. These deviations are clearly sporadic occurrences which do not constitute new methods for driving a quasi resonant converter in the direction taught by the present invention.

The applicant has found that the choice of setting $T_{ON}$ as almost constant is conservative as far as the maximum power delivered to the load is concerned, whenever the amplitude of dc-bus voltage $V_{dc\text{-}bus}$ goes below its peak value.

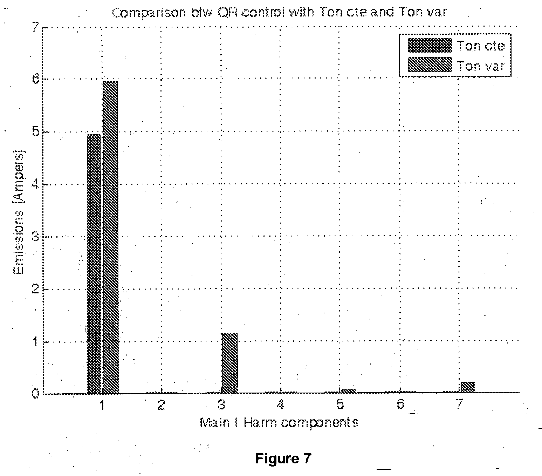

In fig. 7 it is shown the spectral analysis carried on the profile of the electrical current $I_{line}$ drawn by the converter from the power supply network when keeping $T_{ON}$ constant (only the first 7 harmonics are shown for picture clarity) compared to a method in which $T_{ON}$ is varied according to the present invention. From this analysis it derived that when $T_{ON}$ is kept constant just the fundamental harmonic component is substantially present, and its amplitude is equal to the peak of the drawn current $I_{line}$.

A variation of the activation time $T_{ON}$ during the semi period $T_2$ of the rectified voltage $V_{dc\text{-}bus}$ is linked with the modification of the profile of the current $I_{line}$ drawn by the converter from the power supply network. According to the present invention the modification of the profile of the drawn current $I_{line}$ is performed to increase the adjustable range of the converter power without loosing soft-switching conditions. Assuming for sake of simplicity a linear resistive load R, the $T_{ON}$ control strategy according to the present invention causes the profile of current $I_{line}$ drawn from the power supply network to depart from the almost sinusoidal profile known in the art, which is obtainable when the activation time $T_{ON}$ is kept constant.

In a first preferred embodiment, a favourable profile of the current drawn from the power supply network $I_{line}$ is obtained when the activation time $T_{ON}$ is varied in an opposite manner to the actual variation of the DC-bus voltage $V_{dc\text{-}bus}$: the activation time $T_{ON}$ is increased when the DC-bus voltage $V_{dc\text{-}bus}$ decreases and is decreased when the he DC-bus voltage $V_{dc\text{-}bus}$ voltage increases. In other alternative embodiments $T_{ON}$ can be maintained constants for some fraction(s) o the power supply semi period $T_2$ or either decreased.

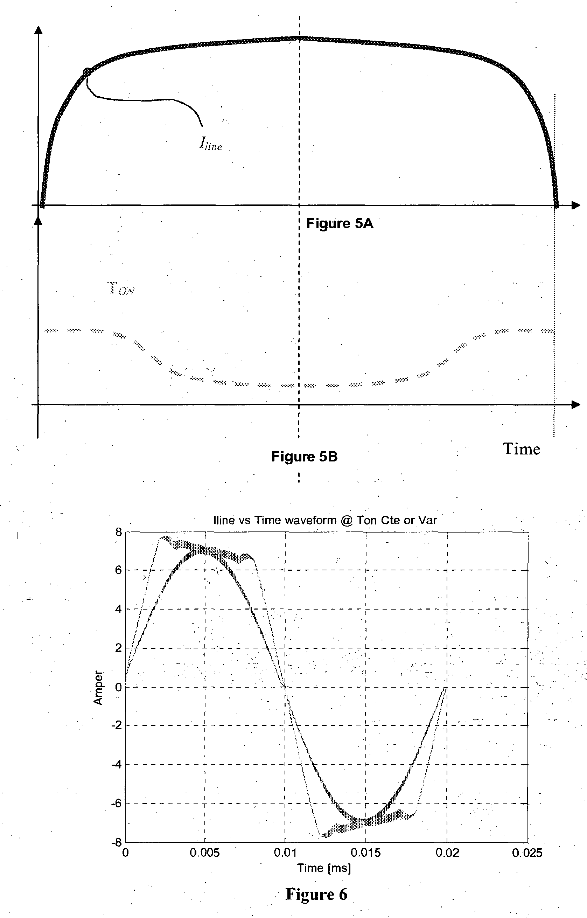

According to a second preferred embodiment of the invention, the activation time $T_{ON}$ of the converter is modulated in order to shape the profile of the current $I_{line}$ drawn from the network to preferably assume a optimal target input profile $I_{main\ set}$, as for instance the one shown in Fig. 5A. That optimal target input current profile is calculated off-line by optimization methods, in order to give the maximum power increase under the constraint to not exceed regulatory limits on current harmonics, like for instance the standard IEC61000-3-2 applicable to cooking household appliances sold in Europe. The net effect of using this optimal input current profile is to draw a line current $I_{line}$ from the network that increases the magnitude value of the first mains current harmonic, thus leading to an increase of the input power delivered by the converter to the load for a given peak $V_{C'E'}$ and for a given maximum allowed peak current. As a result the upper limit of the power range into which the converter power becomes adjustable is increased.

The optimal target input profile of the current $I_{line}$ drawn from the network by the converter is obviously far from being perfectly sinusoidal and therefore harmonic emissions would be worse compared with the known methods in which the activation time $T_{ON}$ is held constant, as shown in Fig. 6. In particular the amplitude of the harmonics beyond the fundamental, generated by the method according to the invention, are higher (see in Fig. 7).

When applying the method of the present invention the active power of the quasi resonant converter delivered to the load LR can be increased compared to the known methods in which the activation time $T_{ON}$ is kept substantially constant, and especially when the activation time is kept equal to the critical value $T_{ON\ Critical}$ during the whole semi period $T_2$. In particular, with a proper selection of the target current profile the inventor has found that the active power drawn from the network by the converter over the semi period $T_2$, can be increased in the range between 5% and 40% and in particular in the range between 10% and 30% when leaving sufficient margin vs. the harmonics regulatory limits.

It is generally known from electrical engineering that the active power absorbed by a load is given by the equation

$$P = \frac{1}{T}\int_0^T V(t) * I(t)dt$$

Where T denotes the duration of a oscillating cycle.

It is also know that, for a purely sinusoidal mains voltage, the active power can be also expressed just in terms of the first harmonic $I_{1st}$

$$P = \frac{1}{T}\int_0^T V(t) * I_{1st}(t)dt$$

being the harmonics with order higher than one, in quadrature with the voltage, thus producing a null integral.

A gain of 25% in active power is for instance achievable with quasi-linear loads without violating the harmonic emission level established by the European Norm on Current Harmonics (IEC 61000-3-2), by shaping the profile of the current drawn by the load as in Fig. 5A. Quasi-linear loads are those typically offered by induction coils. As a consequence also the active power deliverable to the load LR can be in the same manner increased in the range between 5% and 40%.

According to the present invention, to achieve an increase of the active power, the average value $T_{ON-AVG}$ of the activation time $T_{ON}$ applied over the said semi period $T_2$ must be substantially greater than the value of $T_{ON}$ at 90° or 270° of the network AC power supply period, which it has been defined as $T_{ON\ Critical}$. An average significant increase of the activation time values $T_{ON}$ above the critical $T_{ON\ Critical}$ (safe value) over the semi period $T_2$, allows to achieve a significant increase (for instance above 5%) of the fundamental component of the current drawn from the line $I_{line}$ and consequently of the active power delivered by the quasi resonant converter to the load.

In some cases the activation time $T_{ON}$ can be set equal to $T_{ON\ Critical}$ (critical safe value) at angle different from 90° or 270° of the network AC power supply period, but not necessarily as for some "saddle" shaped profiles (not shown).

In some other cases the target current profile and hence the $T_{ON}$ profile can be changed from one mains half-wave to the others in order to produce fluctuating harmonics. These strategies allow exploiting the higher limit allowed by the international standards for fluctuating harmonics, resulting with reduced Electro Magnetic Interfering emissions. By shaping and dimensioning the current drawn by the load from the network $I_{line}$ in a proper manner it is also possible to adjust lower power levels for the quasi resonant converters, especially when supplying induction coils in cooking hobs, and without loosing Soft-Switching conditions.

As a result food spoilage deriving from the application of known power control methods to a resonant converter is avoided.

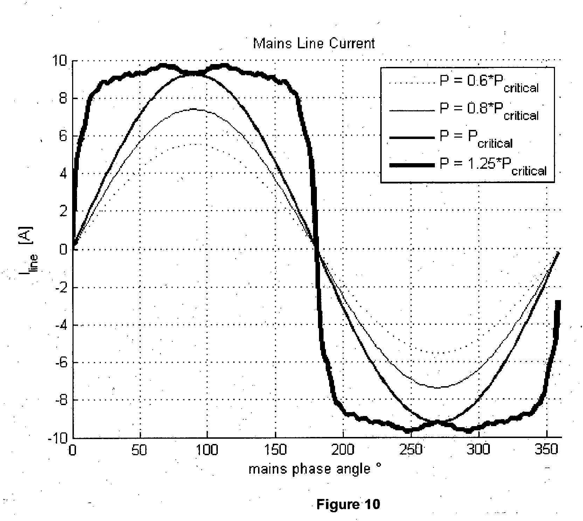

A first preferred application of a power control for instance applicable, to induction cookers or the like and embedding the method of the present invention, is shown in Fig. 10. According to this first preferred embodiment, profiles of the current $I_{line}$ drawn by the converter from the power supply network are varied when different power levels are requested. In particular, the prior art methods which keep the activation time $T_{ON}$ substantially constant throughout the whole mains semi-period $T_2$, are applied whenever the power requested to be delivered to the load (set-point) ranges from the minimum settable level and the power level associated to the $T_{ON\_Critical}$. From this settable power level onward, the current drawn by the load from the network $I_{line}$ is shaped in a advantageous manner according to the present invention.

Applications of the method of the present invention are possible also in closed loop control systems.

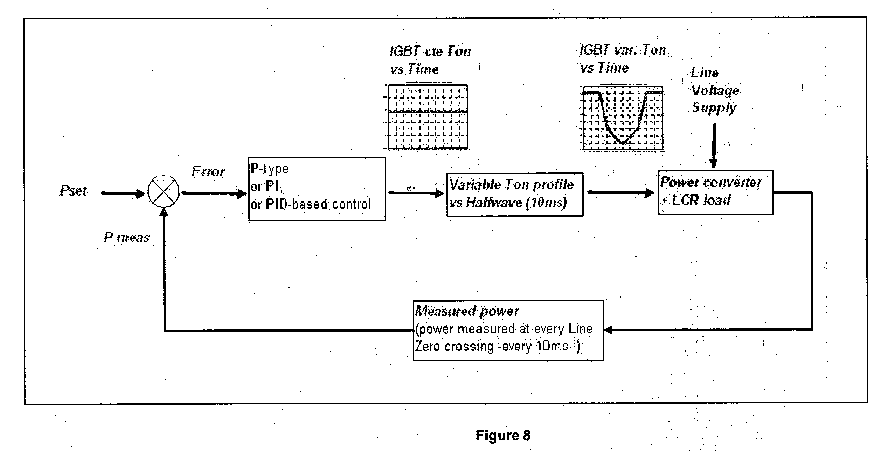

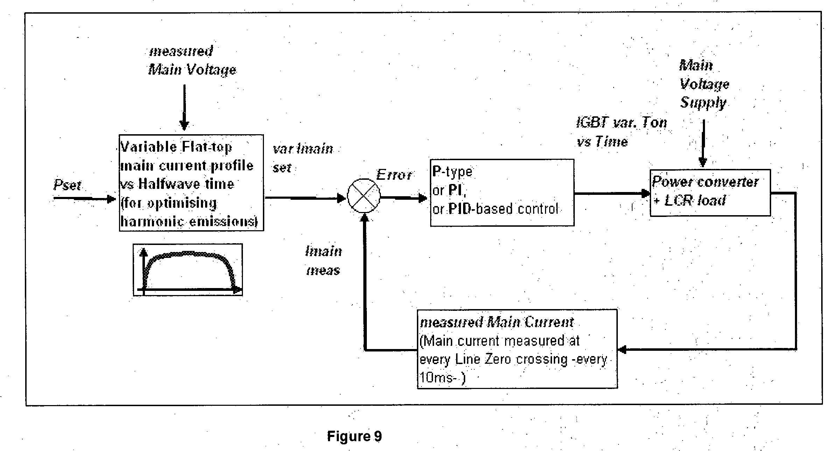

Two preferred embodiments of closed loop control system for controlling the power delivered to the load by a quasi resonant converter in which the method of the present invention is applied, are described in figures 8 and 9.

In the first preferred embodiment shown in fig. 8 the power control is implemented through a closed-loop control scheme aimed to adjust the output power to a set power value $P_{set}$. It includes an algorithm step calculating the required activation time $T_{ON}$ during each control period instant belonging the power supply semi period $T_2$.

An average value $T_{ON-AVG}$ o of the activation time $T_{ON}$ can be for instance calculated by means of standard control methods (either a PID control, a predictive or the like), for adjusting the output power of delivered to the load by the converter to the set power $P_{set}$ (to be supplied either instantaneously or average power, along several semi periods). Such average $T_{ON-AVG}$ o is then added to values taken from a lookup-table containing deviations of $T_{ON}$ vs. an index corresponding to the mains phase angle. As result, the "instantaneous" activation time $T_{ON}$ will fluctuate as for instance shown in Fig. 5B, producing the desired active power increase.

In the second preferred embodiment it is described in Fig. 9 a closed-loop control of the current $I_{line}$ drawn from the network. The control has in input the difference between instantaneous current $I_{line}$ drawn by the converter form the AC power supply network and a target (optimal) input current profile $I_{main\ set}$ obtained as described before. The target current input profile stands higher or in some point equal to the almost sinusoidal profile obtainable by keeping $T_{ON}$ constant along all the semi period, whenever a active power increase compared to know methods is requested to be delivered to the load. The difference between the target current $I_{main\ set}$ profile and the measured current $I_{line}$ is the input of a regulator (for instance a PID or the like), which has in output the activation time $T_{ON}$ used to drive the gate of the IGBT during control periods. In a preferred implementation the target current $I_{main\ set}$ profile is obtained digitally and includes at least the following steps: in a first step the required rms (root mean square) target current is calculated by dividing the Power requested ($P_{set}$) to be supplied to the load by the rms voltage of the AC power supply network. In a second step, this rms current target is then "multiplied" by a normalized optimal target current profile, whose rms value is equal to 1 and whose shape is the optimal shape explained before. Such normalized (and optionally optimal) target current profile is mapped and stored into a non volatile part of the memory of the embedded control unit controlling the converter. As a result of these two steps a current target profile $I_{main\_set}$ is generated and will then be tracked in closed loop during each mains semi-period $T_2$, or during a plurality of semi periods.

Beside these two control method, the man skilled in the art of control theory will easily find other methods to control the input current waveform to behave as described before. It is also obvious to the skilled man that the aforementioned control methods can be implemented either in analogue or in digital form. Should the digital form be preferred, the activation period $T_{ON}$ will be periodically updated (during each control period) at a discrete time pace in a range preferably between the commutation period and 400 μs. This range is superiorly limited by the parasitic harmonic emission effects (typically linked to the 50th harmonics) which takes place if the update rate of the activation time $T_{ON}$ is coarser than this value. The range is also lower limited by the computation performance of the digital controller (microprocessor, microcontroller, DSP of FPGA) used in the hardware architecture. With a discrete time amplitude resolution, the range is preferably between 10ns and 250ns.

It follows that an active power increase in the range between 5% to 40%, is achievable by applying the method of the present invention.

Finally, the benefits of the aforementioned active power increases without any substantial modification of the hardware architectures are actually of paramount importance for the applicability of cycle skipping techniques to Quasi Resonant converters, especially in the household appliances field.

In fact, a further improvement of the performances is achievable by using the method of the present invention in combination with the "cycle skipping", that are techniques for modulating the power to be delivered to the loads LR for a long time period comprising several semi periods $T_2$ (see for instance US4871961).

It is known that "cycle skipping" techniques are leading to flicker and harmonic emissions exceeding the admitted values when the power rating of the electric load being cycle-skipped is greater than about 1kW. On the other side it is also well known that QR converters featuring an acceptable efficiency can hardly exceed a 1.8:1 power regulation ratio. It follows that prior than the present invention "cycle skipping" technique could have been applied only if the maximum manageable power would have been limited to about 1.8kW, which is much lower than the maximum level being required by an electric induction hob presently sold on the market.

By applying the method of present invention in which an active power increase of 25% is delivered to a heating element rated 1.8kW (the load) by using, for instance, the current profile of figure 5A in combination with cycle skipping techniques a power magnitude of 1.8kW x 1.25 = 2.3 kW becomes available and adjustable almost continuously, This represents a breakthrough for QR converters.

In other words, the present invention combined with cycle skipping, will allow the same regulation range of high-end Half-Bridge converters, at a manufacturing cost which is nearly halved.

**Claims**

1. Method for controlling a quasi-resonant converter (QR) suitable to drive an inductive load (L, R), particularly an induction coil coupled with a superposed cooking utensil, said converter (QR) being supplied with an alternate power supply voltage (AC) from a power supply source, said alternate power supply voltage (AC) being rectified in order to obtain a rectified voltage ($V_{dc-bus}$) provided with a predetermined pulsing semi period ($T_2$), comprising the steps of:

- activating a switch (IGBT) of said converter (QR) for a predetermined activation time ($T_{ON}$) within said period ($T_2$)
- de-activating the switch (IGBT) of said converter (QR) for a predetermined deactivation time ($T_{OFF}$) within said semi period ($T_2$),

repeating the cyclic alternation of those two steps repeated within the semi period (T2) resulting in the converter to draw an electrical current ($I_{line}$) and an active Power (P) from said power supply source, **characterized in that** the switch (IGBT) activation time ($T_{ON}$) is varied during said semi period ($T_2$) so that an average activation time value ($T_{ON-AVG}$) over said semi period ($T_2$) is greater than a critical value ($T_{ON\ Critical}$) of a predetermined quantity, said critical value ($T_{ON\ Critical}$) corresponding to the maximum activation time value ($T_{ON}$) applicable to said switch (IGBT) when said rectified voltage ($V_{dc-bus}$) reaches a maximum voltage value during said semi period ($T_2$), said predetermined quantity being such that the active power (P) absorbed by the converter from the AC line over said semi period ($T_2$) is increased in a range between 5% and 40% of the active power (P) absorbed by the converter when the activation time ($T_{ON}$) is set constant during the entire semi period ($T_2$) and equal to said critical value ($T_{ON\ Critical}$).

2. Method according to claim 1 wherein said maximum voltage value corresponds to an amplitude of said rectified voltage ($V_{dc-bus}$) when a phase value of said power supply voltage (AC) is equal to 90° or 270°.

3. Method according to claim 1 or 2 wherein said predetermined quantity is such that the active power (P) drawn by the converter is in particular increased in the range between 10% and 30% of the active power (P) drawn by the converter when the activation time ($T_{ON}$) is set constant during the entire semi period ($T_2$) and equal to said critical value ($T_{ON\ Critical}$).

4. Method according to claim 3 wherein said predetermined quantity is such that the active Power (P) drawn by the converter is increased of about 25% of the electrical active power (P) drawn by the converter when the activation time ($T_{ON}$) is set constant during the entire semi period ($T_2$) and equal to said critical value ($T_{ON\ Critical}$).

5. Method according to any of the preceding claims wherein when said maximum voltage value is reached, a voltage across terminals (C', E') of said switch (IGBT) has a maximum allowable value ($V_{res\ Critical}$) which is in the range between 80% and 95% of a breakdown voltage value of said switch (IGBT).

6. Method according to claim 5 wherein said maximum allowable value ($V_{res\ Critical}$) is about 90% of the breakdown voltage value of said switch (IGBT).

7. Method according to any of the preceding claims wherein said method is applied to a closed loop control system for regulating a power ($P_{meas}$) delivered by the converter (QR) to said inductive load (L, R) during said semi period ($T_2$) or during a plurality of semi periods ($T_2$).

8. Method according to any of the preceding claims wherein the profile of the current ($I_{line}$) drawn by the converter from the power supply source during said semi period ($T_2$) has a first harmonic component whose magnitude is higher than the magnitude of the first harmonic component of the profile of the current obtainable when the activation time ($T_{ON}$) is set constant during the entire semi period ($T_2$) and wherein said maximum voltage value across said terminals (C', E') of said switch (IGBT) is the same.

9. Method according to any of the preceding claims wherein it is applied to a closed loop control system for regulating a profile of the current ($I_{line}$) drawn by the converter from the power supply source.

10. Method according to any of the preceding claims further comprising the step of defining a target current ($I_{main\ set}$) profile to be drawn by the converter (QR) from said power supply source (QR) during said semi period ($T_2$) or during a plurality of semi periods ($T_2$).

11. Method according to claims 7 and 10 further comprising the steps of:

- obtaining a first value by dividing a power target value ($P_{set}$) to be supplied to the load (L, R) during the semi period ($T_2$), by a root mean square voltage value of said power supply voltage (AC); and
- multiplying first value by a numerical target profile stored into a memory unit and obtaining said current target profile ($I_{main\ set}$).

12. Method according to claim 11 further comprising the step of calculating corresponding activation time ($T_{ON}$) for each value of said current target profile ($I_{main,\ set}$).

13. Method according to any of the claims between 8 and 12 wherein the current target profile ($I_{main\ set}$) stands above to an almost sinusoidal profile obtainable when the activation time ($T_{ON}$) is set constant during the entire semi period ($T_2$) and wherein said maximum voltage value across said terminals (C', E') of said switch (IGBT) is the same. -

14. Method according to any of the claims from 7 to 13, wherein the method is applied only whenever the active power ($P_{meas}$) to be delivered by the converter (QR) to said inductive load (L, R) during said semi period ($T_2$) exceeds the active power (P) being deliverable by the converter (QR) when the activation time ($T_{ON}$) is kept constant and equals to said critical value ($T_{ON\ Critical}$).

15. Method according to any of the preceding claims wherein it is applied in combination with a cycle skipping control method.

16. Quasi resonant converter (QR) adapted to supply a load (L, R), **characterized in that** it comprises means **adapted to regulate** a current ($I_E$) trough said load (L, R) according to a method described in any of the preceding claims.


**Patentansprüche**

1. Verfahren zum Steuern eines quasiresonanten Wandlers (QR), der sich zum Schalten einer induktiven Last (L, R) eignet, im Speziellen für eine Induktionsspule, die mit einem überlagerten Kochutensil verbunden ist, wobei der besagte Wandler (QR) aus einer Stromversorgungsquelle mit einer Wechselspannung (AC) versorgt wird, wobei die besagte Wechselspannung (AC) gerichtet wird, um eine gerichtete Spannung ($V_{dc-bus}$) zu erhalten, die mit einer vorbestimmten Pulshalbperiode ($T_2$) bereitgestellt wird, die folgenden Schritte umfassend:

- Aktivieren eines Schalters (IGBT) des besagten Wandlers (QR) für eine vorbestimmte Aktivierungszeit ($T_{ON}$) innerhalb der besagten Periode ($T_2$)
- Deaktivieren des Schalters (IGBT) des besagten Wandlers (QR) für eine vorbestimmte Deaktivierungszeit ($T_{OFF}$) innerhalb der besagten Periode ($T_2$)

Wiederholen des zyklischen Wechsels dieser beiden innerhalb der Halbperiode ($T_2$) wiederholten Schritte, was im Wandler dazu führt, dass ein elektrischer Strom ($I_{line}$) und eine aktive Leistung (P) aus der besagten Stromversorgungsquelle gezogen wird,
**dadurch gekennzeichnet, dass** die Aktivierungsdauer ($T_{ON}$) des Schalters (IGBT) während der besagten Halbperiode ($T_2$) variiert wird, sodass ein durchschnittlicher Aktivierungszeitwert

($T_{ON-AVG}$) über die besagte Halbperiode ($T_2$) größer ist, als ein kritischer Wert ($T_{ON-CRITICAL}$) einer vorbestimmten Menge, wobei der besagte kritische Wert ($T_{ON-CRITICAL}$) dem maximalen Aktivierungszeitwert ($T_{ON}$) entspricht, der auf den besagten Schalter (IGBT) anwendbar ist, wenn die besagte gerichtete Spannung ($V_{dc-bus}$) einen maximalen Spannungswert während der besagten Halbperiode ($T_2$) erreicht, wobei die besagte vorbestimmte Menge dergestalt ist, dass die aktive Leistung (P), die vom Wandler von der AC Leitung über die besagte Halbperiode ($T_2$) hinweg aufgenommen wird, in einem Bereich zwischen 5% und 40% höher ist, als die aktive Leistung (P), die vom Wandler aufgenommen wird, wenn die Aktivierungszeit ($T_{ON}$) während der gesamten Halbperiode ($T_2$) konstant eingestellt ist und gleich dem besagten kritischen Wert ($T_{ON-CRITICAL}$) ist.

2. Verfahren nach Anspruch 1, wobei der besagte maximale Spannungswert einer Amplitude der besagten gerichteten Spannung ($V_{dc-bus}$) entspricht, wenn ein Phasenwert der besagten Versorgungsspannung (AC) gleich 90° oder 270° ist.

3. Verfahren nach Anspruch 1 oder 2, wobei die besagte vorbestimmte Menge dergestalt ist, dass die aktive Leistung (P), die vom Wandler gezogen wird, im Speziellen in einem Bereich zwischen 10% und 30% höher ist, als die aktive Leistung (P), die vom Wandler gezogen wird, wenn die Aktivierungszeit ($T_{ON}$) während der gesamten Halbperiode ($T_2$) konstant eingestellt ist und gleich dem besagten kritischen Wert ($T_{ON-CRITICAL}$) ist.

4. Verfahren nach Anspruch 3, wobei die besagte vorbestimmte Menge dergestalt ist, dass die aktive Leistung (P), die vom Wandler gezogen wird, um etwa 25% höher ist, als die aktive Leistung (P), die vom Wandler gezogen wird, wenn die Aktivierungszeit ($T_{ON}$) während der gesamten Halbperiode ($T_2$) konstant eingestellt ist und gleich dem besagten kritischen Wert ($T_{ON-CRITICAL}$) ist.

5. Verfahren nach einem der vorherigen Ansprüche, wobei, wenn der besagte maximale Spannungswert erreicht ist, eine Spannung über den Anschlussklemmen (C', E') des besagten Schalters (IGBT) einen maximal zulässigen Wert ($V_{res-Critical}$) aufweist, der in einem Bereich zwischen 80% und 95% eines Durchbruchspannungswerts des besagten Schalters (IGBT) liegt.

6. Verfahren nach Anspruch 5, wobei der maximal zulässige Wert ($V_{res-Critical}$) bei etwa 90% des Durchbruchspannungswerts des besagten Schalters (IGBT) liegt.

**7.** Verfahren nach einem der vorherigen Ansprüche, wobei das besagte Verfahren auf ein Regelungssystem zum Regeln einer Leistung ($P_{meas}$) angewandt wird, die vom Wandler (QR) während der besagten Halbperiode ($T_2$) oder während einer Vielzahl von Halbperioden ($T_2$) auf die besagte induktive Last ($L$, $R$) geschaltet wird.

**8.** Verfahren nach einem der vorherigen Ansprüche, wobei das Profil des Stroms ($I_{line}$), das vom Wandler während der besagten Halbperiode ($T_2$) aus der Stromversorgungsquelle gezogen wird, eine erste harmonische Komponente aufweist, deren Magnitude höher ist, als die Magnitude der ersten harmonischen Komponente des Profils des Stroms, den man erhalten kann, wenn die Aktivierungszeit ($T_{ON}$) während der gesamten Halbperiode ($T_2$) konstant eingestellt ist, und wobei der besagte maximale Spannungswert über den Anschlussklemmen (C', E') des besagten Schalters (IGBT) derselbe ist.

**9.** Verfahren nach einem der vorherigen Ansprüche, wobei es auf ein Regelungssystem zum Regeln eines Profils des Stroms ($I_{line}$) angewandt wird, der vom Wandler aus der Stromversorgungsquelle gezogen wird.

**10.** Verfahren nach einem der vorherigen Ansprüche, darüber hinaus den Schritt zum Definieren eines Zielstromprofils ($I_{main set}$) umfassend, das vom Wandler (QR) während der besagten Halbperiode ($T_2$) oder während einer Vielzahl von Halbperioden ($T_2$) aus der besagten Stromversorgungsquelle (QR) zu ziehen ist.

**11.** Verfahren nach den Ansprüchen 7 und 10, darüber hinaus die folgenden Schritte umfassend:

- Erhalt eines ersten Werts durch Teilen eines Leistungszielwerts ($P_{set}$), der während der Halbperiode ($T_2$) auf die Last ($L$, $R$) zu schalten ist, durch einen Effektivwert der Spannung der besagten Versorgungsspannung (AC); und
- Multiplizieren des ersten Wertes mit einem numerischen Zielprofil, das in einer Speichereinheit gespeichert ist, und Erhalt des besagten Zielstromprofils ($I_{main set}$).

**12.** Verfahren nach Anspruch 11, darüber hinaus den Schritt der Berechnung der entsprechenden Aktivierungszeit ($T_{ON}$) für jeden Wert des besagten Zielstromprofils ($I_{main set}$) umfassend.

**13.** Verfahren nach einem der Ansprüche zwischen 8 und 12, wobei das Zielstromprofil ($I_{main set}$) über einem beinahe sinusförmigen Profil steht, das man erhalten kann, wenn die Aktivierungszeit ($T_{ON}$) während der gesamten Halbperiode ($T_2$) konstant ein-

gestellt ist und wobei der besagte maximale Spannungswert über den Anschlussklemmen (C', E') des besagten Schalters (IGBT) derselbe ist.

**14.** Verfahren nach einem der Ansprüche 7 bis 13, wobei das Verfahren nur angewandt wird, wann immer die aktive Leistung ($P_{meas}$), die vom Wandler (QR) während der besagten Halbperiode ($T_2$) auf die besagte induktive Last ($L$, $R$) zu schalten ist, die aktive Leistung ($P$) übersteigt, die vom Wandler (QR) abgegeben werden kann, wenn die Aktivierungszeit ($T_{ON}$) konstant gehalten wird und gleich dem besagten kritischen Wert ($T_{ON-CRITICAL}$) ist.

**15.** Verfahren nach einem der vorherigen Ansprüche, wobei es in Verbindung mit einem Steuerverfahren angewandt wird, das einen Zyklus überspringt.

**16.** Quasiresonanter Wandler (QR), der ausgeführt ist, um eine Last (L, R) zu schalten, **dadurch gekennzeichnet, dass** er Mittel umfasst, die ausgeführt sind, um einen Strom ($I_\varepsilon$) durch die besagte Last (L, R) entsprechend einem Verfahren nach einem der vorherigen Ansprüche zu regeln.

**Revendications**

**1.** Procédé de commande d'un convertisseur quasi-résonnant (QR) convenant pour entraîner une charge inductrice (L, R), en particulier une bobine d'induction couplée à un ustensile de cuisson superposé, ledit convertisseur (QR) étant alimenté par une tension d'alimentation électrique alternative (CA) provenant d'une source d'alimentation électrique, ladite tension d'alimentation électrique alternative (CA) étant redressée afin d'obtenir une tension redressée ($V_{bus cc}$) fournie avec une demi-période d'impulsion prédéterminée ($T_2$) comprenant les étapes consistant à :

- activer un commutateur (IGBT) dudit convertisseur (QR) pendant une période d'activation prédéterminée ($T_{MARCHE}$) dans ladite période ($T_2$),
- désactiver le commutateur (IGBT) dudit convertisseur (QR) pendant une période de temps de désactivation prédéterminée ($T_{AFFET}$ dans ladite demi-période ($T_2$),

répéter l'alternance cyclique de ces deux étapes répétées dans la demi-période ($T_2$) en obtenant pour résultat que le convertisseur tire un courant électrique ($I_{ligne}$) et une puissance active (P) de ladite source d'alimentation électrique,
**caractérisé en ce que** le temps d'activation ($T_{MARCHE}$) du commutateur (IGBD) est modifié au cours de ladite demi-période ($T_2$) de sorte qu'une valeur de temps d'activation moyenne ($T_{MAFCHE-MOYEN}$) sur ladite demi-période ($T_2$) soit supérieure à une valeur critique ($T_{MARCHE\ Critique}$) d'une quantité prédéterminée, ladite valeur critique ($T_{MARCHE\ Critique}$) correspondant à la valeur de temps d'activation maximale ($T_{MARCHE}$) applicable audit commutateur (IGBT) lorsque ladite tension redressée ($V_{bus\ cc}$) atteint une valeur de tension maximale au cours de ladite demi-période ($T_2$), ladite quantité prédéterminée étant telle que la puissance active (P) absorbée par le convertisseur de la ligne CA sur ladite demi-période ($T_2$) soit augmentée dans une plage comprise entre 5 % et 40 % de la puissance active (P) absorbée par le convertisseur lorsque le temps d'activation ($T_{MARCHE}$) est réglé constant au cours de toute la demi-période ($T_2$) et est égal à ladite valeur critique ($T_{MARCHE\ Critique}$).

2. Procédé selon la revendication 1, dans lequel ladite valeur de tension maximale correspond à une amplitude de ladite tension redressée ($V_{bus\ cc}$) lorsqu'une valeur de phase de ladite tension d'alimentation électrique (CA) est égale à 90° ou à 270°.

3. Procédé selon la revendication 1 ou la revendication 2, dans lequel ladite quantité prédéterminée est telle que la puissance active (P) retirée par le convertisseur soit en particulier accrue dans la plage comprise entre 10 % et 30 % de la puissance active (P) retirée par le convertisseur lorsque le temps d'activation ($T_{MARCHE}$) est réglé constant au cours de toute la demi-période ($T_2$) et est égal à ladite valeur critique ($T_{MARCHE\ Critique}$).

4. Procédé selon la revendication 3, dans lequel ladite quantité prédéterminée est telle que la puissance active (P) retirée par le convertisseur soit augmentée d'environ 25 % de la puissance active électrique (P) retirée par le convertisseur lorsque le temps d'activation ($T_{MARCHE}$) est réglé constant au cours de toute la demi-période ($T_2$) et est égal à ladite valeur critique ($T_{MARCHE\ Critique}$).

5. Procédé selon l'une quelconque des revendications précédentes, dans lequel, lorsque ladite valeur de tension maximale est atteinte, une tension aux bornes (C', E') dudit commutateur (IGBT) a une valeur maximale admissible ($V_{res\ Critique}$) qui se situe dans la plage comprise entre 80 % et 95 % d'une valeur de tension de claquage dudit commutateur (IGBT).

6. Procédé selon la revendication 5, dans lequel ladite valeur maximale admissible ($V_{res\ Critique}$) est d'environ 90 % de la valeur de tension de claquage dudit commutateur (IGBT).

7. Procédé selon l'une quelconque des revendications précédentes, dans lequel ledit procédé est appliqué à un système de commande à boucle fermée pour réguler une puissance ($P_{mes}$) délivrée par le convertisseur (QR) à ladite charge inductrice (L, R) au cours de ladite demi-période ($T_2$) ou au cours d'une pluralité de demi-périodes ($T_2$).

8. Procédé selon l'une quelconque des revendications précédentes, dans lequel le profil du courant ($I_{ligne}$) tiré par le convertisseur de la source d'alimentation électrique au cours de ladite demi-période ($T_2$) présente une première composante harmonique dont la grandeur est supérieure à la grandeur de la première composante harmonique du profil du courant que l'on peut obtenir lorsque le temps d'activation ($T_{MARCHE}$) est réglé constant au cours de toute la demi-période ($T_2$) et dans lequel ladite valeur de tension maximale auxdites bornes (C', E') dudit commutateur (IGBT) est la même.

9. Procédé selon l'une quelconque des revendications précédentes, dans lequel il est appliqué à un système de commande à boucle fermée pour réguler un profil du courant ($I_{ligne}$) tiré de la source d'alimentation électrique par le convertisseur.

10. Procédé selon l'une quelconque des revendications précédentes, comprenant en outre l'étape de définition d'un profil de courant cible ($I_{rég\ princ}$) à tirer de ladite source d'alimentation électrique (QR) par le convertisseur (QR) au cours de ladite demi-période ($T_2$) ou au cours d'une pluralité de demi-périodes ($T_2$).

11. Procédé selon les revendications 7 et 10 comprenant en outre les étapes consistant à :

- obtenir une première valeur en divisant une valeur cible électrique ($P_{set}$) à fournir à la charge (L, R) au cours de la demi-période ($T_2$) par une valeur de tension quadratique moyenne de ladite tension d'alimentation électrique (CA) ; et
- multiplier la première valeur par un profil cible numérique stocké dans une unité de mémoire et obtenir ledit profil cible de courant ($I_{rég\ princ}$).

12. Procédé selon la revendication 11, comprenant en outre l'étape de calcul du temps d'activation correspondant ($T_{MARCHE}$) pour chaque valeur dudit profil cible de courant ($I_{rég\ princ}$).

13. Procédé selon l'une quelconque des revendications 8 et 12, dans lequel le profil cible de courant ($I_{amin\ set}$) se situe au-dessus d'un profil presque sinusoïdal lorsque le temps d'activation ($T_{MARCHE}$) est réglé constant au cours de toute la demi-période ($T_2$) et dans lequel ladite valeur de tension maximale auxdites bornes (C', E') dudit commutateur (IGBT) est la même.

**14.** Procédé selon l'une quelconque des revendications 7 à 13, dans lequel le procédé est appliqué uniquement chaque fois que la puissance active ($P_{mes}$) à délivrer par le convertisseur (QR) à ladite charge inductrice (L, R) au cours de ladite demi-période ($T_2$) dépasse la puissance active (P) qui peut être délivrée par le convertisseur (QR) lorsque le temps d'activation ($T_{MARCHE}$) est maintenu constant et est égal à ladite valeur critique ($T_{MARCHE\ Critique}$).

**15.** Procédé selon l'une quelconque des revendications précédentes, dans lequel il est appliqué en combinaison avec un procédé de commande de saut de cycle.

**16.** Convertisseur quasi-résonnant (QR) adapté pour alimenter une charge (L, R), **caractérisé en ce qu'**il comprend des moyens adaptés pour réguler un courant ($I_E$) à travers ladite charge (L, R) selon un procédé décrit dans l'une quelconque des revendications précédentes.

Voltage supply
at user house

Coil + Pot aprox Impedance model

DC-bus

**Figure 1**

**Figure 2**

**Figure 3**

Mains half-period (10ms or
8.33ms)

Time

**Figure 4**

**Figure 5A**

**Figure 5B**

Time

**Figure 6**

Figure 7

Figure 8

Figure 9

Figure 10

**EP 2 525 485 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003205572 A1
- EP 1734789 A1

- US 4871961 A